Europäisches Patentamt

European Patent Office

Office européen des brevets

(11) Publication number: **0 057 739**
A1

## (12) EUROPEAN PATENT APPLICATION

(21) Application number: 81100895.2

(22) Date of filing: 09.02.81

(51) Int. Cl.³: **C 08 F 10/00**
C 08 F 4/64, C 08 F 4/02
C 08 F 4/62

(43) Date of publication of application:
18.08.82 Bulletin 82/33

(84) Designated Contracting States:
BE DE FR IT NL

(71) Applicant: THE DOW CHEMICAL COMPANY
Dow Center 2030 Abbott Road Post Office Box 1967
Midland Michigan 48640(US)

(72) Inventor: Shipley, Randall Sherman
4830 Heathrow Lane
Alvin Texas(US)

(74) Representative: Casalonga, Axel et al,
BUREAU D.A. CASALONGA OFFICE JOSSE & PETIT
Baaderstrasse 12-14
D-8000 München 5(DE)

(54) Ultra high efficiency catalyst for polymerizing olefins and process of polymerization of olefins using it.

(57) Compositions resulting from the mixing of a transition metal compound such as a tetraalkoxy titanium compound and a zinc compound such as a dialkyl zinc compound are useful in preparing catalysts for the polymerization of α-olefins at high temperatures with ultra-high efficiencies.

EP 0 057 739 A1

## ULTRA HIGH EFFICIENCY CATALYST
### FOR POLYMERIZING OLEFINS
### AND PROCESS OF POLYMERIZATION OF OLEFINS USING IT.

This invention relates to new catalyst compositions useful for the polymerization of $\alpha$-olefins and to a polymerization process employing such catalyst compositions.

It is well known that olefins such as ethylene, propylene and 1-butene can be polymerized in the presence of metallic catalysts, particularly the reaction products of organometallic compounds and transition metal compounds, to form substantially unbranched polymers of relatively high molecular weight. Typically, such polymerizations are carried out at relatively low temperatures and pressures with an inert organic liquid diluent or carrier. Following polymerization, it is common to remove catalyst residues from the polymer by repeatedly treating the polymer with alcohol or other deactivating agent such as aqueous base. Such catalyst deactivation and/or removal procedures are expensive both in time and material consumed as well as the equipment required to carry out such treatment.

Most known catalyst systems are more efficient in preparing polyolefins in a slurry rather than in solution at a temperature high enough to solubilize the polymer in the carrier. The lower efficiencies of such catalysts in solution polymerization is believed to be caused by rapid depletion or deactivation at the significantly higher temperatures normally employed in solution processes. Also, processes involving the copolymerization of ethylene with higher α-olefins exhibit catalyst efficiencies significantly lower than in ethylene homopolymerization.

Recently, catalysts having higher efficiencies have been disclosed, e.g., U.S. Patents 3,392,159, 3,737,393, and 4,115,319; West German Patent Application 2,231,982 and British Patents 1,305,610, 1,358,437, and 1,492,379. While the increased efficiencies achieved by using these recent catalysts are significant, even higher efficiencies are desirable, particularly in copolymerization processes. Also, higher reaction temperatures reduce the energy requirements, particularly in removing the solvent.

The present invention in one aspect is a transition metal compound suitable for use in the preparation of olefin polymerization catalysts which is the reaction product or complex formed by mixing at a temperature and time sufficient to provide a color change

(a) a transition metal compound having at least one hydrocarbyloxy group attached to said transition metal and

(b) a zinc compound;

wherein the atomic ratio of Zn to transition metal (Tm) is at least 0.03:1, preferably from about 0.12:1 to 5:1 and most preferably from about 0.25:1 to 2:1. Higher Zn:Tm ratios can be employed, however, no particular advantage is observed and the higher levels increase the cost of catalysts produced therefrom.

Another aspect of the present invention are catalysts for polymerizing α-olefins which comprise the reaction product of

(a) the above transition metal reaction product or complex;

(b) a magnesium halide resulting from the reaction of

(1) an organomagnesium component and

(2) a halide source; and

(c) an organoaluminum compound, if required.

The components are employed in quantities which provide the composition with atomic ratios of the elements as follows:

Mg:Tm is from 1:1 to 2000:1, preferably from 2:1 to about 200:1 and most preferably from 5:1 to 75:1.

Al:Tm is from 0.1:1 to 2000:1, preferably from 0.5:1 to 200:1 and most preferably from 1:1 to 75:1.

Excess X:Al is from 0.0005:1 to 10:1, preferably from 0.002:1 to 2:1 and most preferably from 0.01:1 to 1.4:1.

Excess X is the amount of halide above that amount theoretically required to convert the organomagnesium component to magnesium dihalide.

The present invention is most advantageously practiced where an α-olefin is polymerized, generally in the presence of hydrogen as a molecular weight control agent, in a polymerization zone containing an inert diluent and the catalytic reaction product. Especially advantageous is the copolymerization of ethylene and higher α-olefins using the ultra high efficiency catalysts. The polymerization is most beneficially carried out under inert atmosphere and relatively low temperature and pressure, although very high pressures are optionally employed.

Olefins which are suitably homopolymerized or copolymerized in the practice of this invention are aliphatic α-monoolefins or α-diolefins having from 2 to 18 carbon atoms. Illustrative of such α-olefins are ethylene, propylene, butene-1, pentene-1, 3-methylbutene-1, 4-methylpentene-1, hexene-1, octene-1, dodecene-1, octadecene-1, 1,7-octadiene, and mixtures thereof. It is understood that α-olefins may be copolymerized with other α-olefins and/or with small amounts, i.e. up to about 25 weight percent based on the polymer, of other ethylenically unsaturated monomers such as styrene, α-ethylstyrene and similar ethylenically unsaturated monomers which do not destroy conventional Ziegler catalysts. Most benefits are realized in the polymerization of aliphatic α-monoolefins, particularly ethylene and mixtures of ethylene and up to 50, especially from 0.1 to 40 weight percent, of propylene, butene-1, hexene-1, octene-1, 4-methylpentene-1, 1,7-octadiene or similar higher α-olefin or diolefin based on total monomer.

Suitable zinc compounds advantageously employed are those represented by the formulae $R_2Zn$ or $RZnX$ wherein each R is independently a hydrocarbyl group having from 1 to about 20, preferably from 1 to about 10, carbon atoms and X is a halogen, preferably chlorine or bromine. Particularly suitable zinc compounds include, for example, diethyl zinc, diphenyl zinc, ethyl zinc chloride, mixtures thereof and the like.

Suitable transition metal compounds which can be employed in the present invention include those represented by the formulae $Tm(OR)_y X_{x-y}$ and $Tm(OR)_{x-2}O$ wherein Tm is a transition metal selected from groups IVB, VB or VIB; each R is independently a hydrocarbyl group, preferably alkyl or aryl, having from 1 to 20, preferably from 1 to 10, carbon atoms; each X is independently a halogen, preferably chlorine or bromine; x has a value equal to the valence of Tm and y has a value from 1 to the valence of Tm.

Particularly suitable transition metal compounds include for example tetraethoxy titanium, tetraisopropoxy titanium, tetra-n-butoxy titanium, di-n-butoxy titanium dichloride, tetraphenoxy titanium, tetra-n-propoxy titanium, tetra-(2-ethylhexoxy) titanium, tri-n-butyoxy vanadium oxide, oxyvanadium trichloride, tri-isopropoxy vanadium oxide, zirconium tetra-n-butoxide, zirconium tetra-n-propoxide, zirconium tetra-isopropoxide, and mixtures thereof.

Suitable organomagnesium components which can be employed in the present invention include those represented by the formula $MgR''_2 \cdot xMR''_y$ wherein each R'' is independently hydrocarbyl or hydrocarbyloxy, M is aluminum, zinc or mixtures thereof and $x$ is about zero to about 10, preferably 0.001 to 5, most preferably from 0.15 to 2.5 and $y$ denotes the number of hydrocarbyl and/or hydrocarbyloxy groups which corresponds to the valence of M. As used herein, hydrocarbyl and hydrocarbyloxy are monovalent hydrocarbon radicals. Preferably, hydrocarbyl is alkyl, cycloalkyl, aryl, aralkyl, alkenyl and similar hydrocarbon radicals having 1 to 20 carbon atoms, with alkyl having 1 to 10 carbon atoms being especially preferred. Likewise, preferably, hydrocarbyloxy is alkoxy, cycloalkyloxy, aryloxy, aralkyloxy, alkenyloxy and similar oxyhydro-carbon radicals having 1 to 20 carbon atoms, with alkyloxy having 1 to 10 carbon atoms is preferred. Hydrocarbyl is preferred over hydrocarbyloxy.

Preferably the organomagnesium compound is a hydrocarbon soluble dihydrocarbylmagnesium such as the magnesium dialkyls and the magnesium diaryls. Exemplary suitable magnesium dialkyls include particularly n-butyl-sec-butyl magnesium, diisopropyl magnesium, di-n-hexyl magnesium, isopropyl-n-butyl magnesium, ethyl-n-hexyl magnesium, ethyl-n-butyl magnesium, di-n-octyl magnesium and others wherein the alkyl has from 1 to 20 carbon atoms. Exemplary suitable magnesium diaryls include diphenylmagnesium, dibenzylmagnesium, and ditolylmagnesium. Suitable organomagnesium compounds include alkyl and aryl magnesium alkoxides and aryloxides and aryl and alkyl magnesium halides with the halogen-free organomagnesium compounds being more desirable.

Among the halide sources which can be employed are the active non-metallic halides and metallic halides.

Suitable non-metallic halides are represented by the formula R'X wherein R' is hydrogen or an active monovalent organic radical and X is a halogen. Particularly suitable non-metallic halides include, for example, hydrogen halides and active organic halides such as t-alkyl halides, allyl halides, benzyl halides and other active hydrocarbyl halides wherein hydrocarbyl is as defined hereinbefore. By an active organic halide is meant a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active as defined above are also suitably employed. Examples of preferred active non-metallic halides include hydrogen chloride, hydrogen bromide, t-butyl chloride, t-amyl bromide, allyl chloride, benzyl chloride, crotyl chloride, methylvinyl carbinyl chloride, α-phenylethyl bromide, diphenyl methyl chloride and the like. Most preferred are hydrogen chloride, t-butyl chloride, allyl chloride and benzyl chloride.

Suitable metallic halides which can be employed herein include those represented by the formula $MR_{y-a}X_a$ wherein M is a metal of Groups IIB, IIIA or IVA, of Mendeleev's Periodic Table of Elements, R is a monovalent organic radical, X is a halogen, y has a value corresponding to the valence of M and a has a value from 1 to y. Preferred metallic halides are aluminum halides of the formula $AlR_{3-a}X_a$ wherein each R is independently hydrocarbyl as defined above such as alkyl, X is a halogen and a is a number from 1 to 3. Most preferred are alkylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitably employed.

It is understood that the organic moieties of the aforementioned organomagnesium, e.g., R", and the organic moieties of the halide source, e.g., R and R', are suitably any other organic radical provided that they do not contain functional groups that poison conventional Ziegler catalysts. Preferably such organic moieties do not contain active hydrogen, i.e., those sufficiently active to react with the Zerewitinoff reagent.

In preparing the reaction product or complex of the present invention from the zinc and transition metal compounds, the two components are simply mixed together in a suitable solvent at any suitable temperature, usually from about -50°C to 100°C, preferably from about 0°C to 30°C, for a time sufficient to cause a color change in the reaction mixture. The exact color change varies depending upon the particular components employed.

The reaction time is also affected by the temperature and concentration of the reactants, e.g., lower temperatures and concentrations require longer times.  The solvents which can be employed include those suitable for preparing the catalysts of this invention.  Hydrocarbon solvents are most suitable.

The magnesium halide can be preformed from the organomagnesium compound and the halide source or it can be prepared in situ in which instance the catalyst is prepared by mixing in a suitable solvent (1) the organomagnesium component; (2) the halide source and (3) the reaction product or complex formed by mixing (a) said transition metal compound and (b) said zinc compound.

The foregoing catalyst components are combined in proportions sufficient to provide atomic ratios as previously mentioned.

In cases wherein neither the organomagnesium component nor the halide source contains aluminum or contains an insufficient quantity of aluminum, it is necessary to include in the total catalyst an aluminum compound such as an alkyl aluminum compound, e.g., a trialkyl aluminum, an alkyl aluminum halide or an aluminum halide.  If polymerization temperatures below 180°C are employed, the atomic ratios of Al:Ti may be from 0.1:1 to 2000:1, preferably from 1:1 to 200:1.  However, when polymerization temperatures above 180°C are employed, the aluminum compound is used in proportions such that the Mg:Al ratio is more than 0.3:1, preferably from 0.5:1 to 10:1, and Al:Ti ratio is less than 120:1, preferably less than 50:1.  The use of very low amounts of aluminum necessitates the use of high purity solvents or diluents in the polymerization zone.  Further, other components present in the zone should be essentially free of impurities which react with aluminum alkyls.  Otherwise, additional quantities of an organometallic compound as previously described, preferably an organoaluminum compound, must be used to react with such impurities.  Moreover, it is understood that in the catalyst the aluminum compound should be in the form of trialkyl aluminum or alkyl aluminum halide provided that the alkyl aluminum halide be substantially free of alkyl aluminum dihalide. In the above mentioned aluminum compounds, the alkyl groups independently have from 1 to about 20, preferably from 1 to about 10 carbon atoms.

When additional quantities of aluminum compound are employed, it can be added to the catalyst during preparation or the aluminum deficient catalyst can be mixed with the appropriate aluminum compound prior to entry into the polymerization reactor or, alternatively, the aluminum deficient catalyst and the aluminum compound can be added to the polymerization reactor as separate streams or additions.

The foregoing catalytic reaction is preferably carried out in the presence of an inert diluent using the concentrations of catalyst components such that the catalytic slurry is from about 0.005 to 1.0 molar (moles/liter) with respect to magnesium.  Suitable inert organic diluents include liquified ethane, propane, isobutane, n-butane, n-hexane, the various isomeric hexanes, isooctane, paraffinic mixtures of alkanes having from 8 to 12 carbon atoms, cyclohexane, methylcyclopentane, dimethylcyclohexane, dodecane, and industrial solvents composed of saturated or aromatic hydrocarbons such as kerosene, naphthas, etc., especially when freed of any olefin compounds and other impurities, and especially those having boiling points in the range from about -50° to 200°C. Also included as suitable inert diluents are benzene, toluene, ethylbenzene, cumene, decalin and the like.

Mixing of the catalyst components to provide the desired catalytic reaction product is advantageously carried out under an inert atmosphere such as nitrogen, argon or other inert gas at temperatues in the range from about -100° to 200°C, preferably from about 0° to 100°C. The period of mixing is not critical as a sufficient catalyst composition most often is formed within about one minute or less. In the preparation of the catalytic reaction product, it is not necessary to separate hydrocarbon soluble components from hydrocarbon insoluble components of the reaction product.

To maximize catalyst efficiency, the catalyst is prepared by mixing the components of the catalyst in an inert liquid diluent in the following especially preferred order:  organomagnesium compound, halide source, the aluminum compound if required, and the reaction product or complex transition metal compound and zinc compound.

In the polymerization process employing the catalytic reaction product, polymerization is effected by adding a catalytic amount of the catalyst to a polymerization zone containing α-olefin monomer, or vice versa and maintaining the mixture at temperatures in the range from about 0° to 300°C, preferably at solution polymerization temperatures of about 130° to 250°C, for a residence time of a few seconds to several days, preferably 15 seconds to 2 hours. A catalytic amount of the catalyst is generally about 0.0001 to 0.1 millimole titanium per liter of diluent. However, that the most advantageous catalyst concentration will depend upon polymerization conditions such as temperature, pressure, solvent and presence of catalyst poisons and the foregoing range is given to obtain maximum catalyst yields in weight of polymer per unit weight of titanium.

Generally, a carrier which may be an inert organic diluent or solvent or excess monomer is employed. To realize the full benefit of the high efficiency catalyst of the present invention, care must be taken to avoid oversaturation of the solvent with polymer. If such saturation occurs before the catalyst becomes depleted, the full efficiency of the catalyst is not realized. For best results, it is preferred that the amount of polymer in the carrier not exceed about 50 weight percent based on the total weight of the reaction mixture.

The polymerization pressures preferably employed are relatively low, e.g., from about 50 to 1000 psig (0.45 to 7.0 MPa), especially from about 100 to 700 psig (0.79 to 4.93 MPa). However, polymerization within the scope of the present invention can occur at pressures from atmospheric up to pressures determined by the capabilities of the polymerization equipment. During polymerization it is desirable to stir the polymerization recipe to obtain better temperature control and to maintain uniform polymerization mixtures througout the polymerization zone.

In order to optimize catalyst yields in the polymerization of ethylene, it is preferable to maintain an ethylene concentration in the solvent in the range of from about 1 to about 10 weight percent, most advantageously from about 1.2 to about 2 weight percent. To achieve this, when an excess of ethylene is fed into the system, a portion of the ethylene can be vented.

Hydrogen can be employed in the practice of this invention to control the molecular weight of the resultant polymer. For the purpose of this invention, it is beneficial to employ hydrogen in concentrations ranging from about 0.001 to about 1 mole per mole of monomer. The larger amounts of hydrogen within this range are found to produce generally lower molecular weight polymers. Hydrogen can be added with a monomer stream to the polymerization vessel or separately added to the vessel before, during or after addition of the monomer to the polymerization vessel, but during or before the addition of the catalyst.

The monomer or mixture of monomers is contacted with the catalytic reaction product in any conventional manner, preferably by bringing the catalytic reaction product and monomer together with intimate agitation provided by suitable stirring or other means. Agitation can be continued during polymerization, or in some instances, the polymerization can be allowed to remain unstirred while the polymerization takes place. In the case of more rapid reactions with more active catalysts, means can be provided for refluxing monomer and solvent, if any of the latter is present, in order to remove the heat of reaction. In any event, adequate means should be provided for dissipating the exothermic heat of polymerization. If desired, the monomer can be brought in the vapor phase into contact with the catalytic reaction product, in the presence or absence of liquid material. The polymerization can be effected in the batch manner, or in a continuous manner, such as, for example, by passing the reaction mixture through an elongated reaction tube which is contacted externally with suitable cooling media to maintain the desired reaction temperature, or by passing the reaction mixture through an equilibrium overflow reactor or a series of the same.

The polymer is readily recovered from the polymerization mixture by driving off unreacted monomer and solvent if any is employed. No further removal of impurities is required. Thus, a significant advantage of the present invention is the elimination of the catalyst residue removal steps. In some instances, however, it may be desirable to add a small amount of a catalyst deactivating reagent of the types conventionally employed for deactivating Ziegler catalysts. The resultant polymer is found to contain insignificant amounts of catalyst residue and to possess a relatively narrow molecular weight distribution.

The following examples are given to illustrate the invention. All percentages are by weight and all parts are by molar or atomic ratio unless otherwise indicated.

In the following examples, the melt index values $I_2$ and $I_{10}$ were determined by ASTM D 1238-70 and the density values were determined by ASTM D 1248.

EXAMPLES 1-5

    A.  Preparation of the diethyl zinc-titanium
        complexes

A stock solution (0.025M) of titanium tetraethoxide ($Ti(OEt)_4$), titanium tetra-n-propoxide ($Ti(OnPr)_4$), titanium tetra-isopropoxide ($Ti(OiPr)_4$), titanium tetra-n-butoxide ($Ti(OnBu)_4$), and titanium tetra -(2-ethylhexoxide) ($Ti(OEH)_4$) was prepared by mixing the amount of neat solution indicated in Table I with sufficient Isopar® E (an isoparaffinic hydrocarbon fraction having a boiling range of 116° to 134°C) to bring the total volume to 100.0 ml. After the solution was well mixed, 10.0 ml of the solution was transferred to a small vial where it was mixed with 10.0 ml of 0.025 M diethyl zinc (DEZ) prepared by diluting 2.84 ml of 0.88 M DEZ to 100 ml using Isopar® E. The final titanium and DEZ concentrations were 0.0125 M. These solutions developed characteristic colors as indicated in Table II and were stored in amber bottles to prevent photodecomposition of the complex.

## TABLE I

Amount of Titanium Species Needed
for a 0.025 M Stock Solution

| Titanium Component | ml Neat Solution Needed |
| --- | --- |
| $Ti(OEt)_4$ | 0.52 |
| $Ti(OnPr)_4$ | 0.74 |
| $Ti(OiPr)_4$ | 0.74 |
| $Ti(OnBu)_4$ | 0.86 |
| $Ti(OEH)_4$ | 1.52 |

27,822A-F

## TABLE II

### CHARACTERISTIC COLORS OF
### DIETHYL ZINC-TITANIUM COMPLEXES

| Time After Mixing | Titanium Compound | | | | |
|---|---|---|---|---|---|
| | $Ti(OEt)_4$ | $Ti(OnPr)_4$ | $Ti(OiPr)_4$ | $Ti(OnBu)_4$ | $Ti(OEH)_4$ |
| 0 min | Light Yellow | Light Green | Clear | Light Green | Clear |
| 5 min | Emerald Green | Blue Green | Clear | Deep Green | Clear |
| 10 min | Dark Blue | Dark Green | Clear | Dark Green | Clear |
| 60 min | " | Very Dark Green | Clear | Very Dark Green | Clear |
| 1 day | " | " | Very Light Blue | " | Very Light Purple |
| 2 days | " | " | Light Green | " | Light Purple |
| 7 days | " | " | Deep Green | " | Purple |

B. <u>Preparation of the Catalyst Composition</u>

The catalyst composition was prepared by mixing with stirring under a nitrogen atmosphere the following components added in the following order:

> 97.07 ml of Isopar® E
> 0.93 ml of 0.64 M di-n-butyl magnesium
> 0.80 ml of 0.94 M ethyl aluminum dichloride
> <u>1.20 ml of 0.0125 M diethyl zinc-titanium complex</u>
> 100.0 ml

The temperature of the mixture was maintained at ambient temperature (about 22°C). Depending on the complex used, the catalyst was initially a bright yellow color. The catalyst then paled to a straw color over a period of 10 minutes, after which time there was no significant change in catalyst color.

C. <u>Polymerization</u>

A stirred batch reactor containing 2 liters of Isopar® E was heated to 150°C. The solvent vapor pressure was 21 psig (0.25 MPa). To this was added 6 psig (0.041 MPa) of hydrogen and 173 psig (1.19 MPa) of ethylene for a total reactor pressure of 200 psig (1.48 MPa). An amount of the above catalyst was injected into the reactor (10 ml = 0.0015 mmole Ti), and the reactor pressure was maintained constant at 200 psig (1.48 MPa) with ethylene. The total reaction time was 20 minutes. The titanium species used and catalyst efficiencies are given in Table III.

COMPARATIVE EXPERIMENTS A-E

    A.  Preparation of the Catalyst Composition

        Using the titanium stock solutions prepared above, the catalyst composition was prepared by mixing with stirring under a nitrogen atmosphere, the following components added in the following order:

    97.67 ml of Isopar[®] E
     0.93 ml of 0.64 M di-n-butyl magnesium
     0.80 ml of 0.94 M ethyl aluminum dichloride
     <u>0.60</u> ml of 0.025 M titanium stock solution
    100.0 ml

        The catalyst was an initial straw color which darkened to a brownish color over a period of an hour. After this time, no further changes were detected.

    B.  Polymerization

        Each of the catalysts were employed to polymerize ethylene using the conditions for Examples 1-5. The results are also shown in Table III.

COMPARATIVE EXPERIMENT F

    A.  Preparation of the Catalyst Composition

        A catalyst composition was prepared where the diethyl zinc was not premixed with the titanium source, but rather was added directly to the catalyst. The catalyst composition was prepared by mixing the following components added in the following order:

    97.07 ml of Isopar[®] E
     0.93 ml of 0.64 M di-n-butyl magnesium
     0.80 ml of 0.94 M ethyl aluminum dichloride
     0.60 ml of 0.025 M Ti(OiPr)$_4$
     <u>0.60</u> ml of 0.025 M diethyl zinc
    100.0 ml

The catalyst was the same color as those prepared for comparative experiments A-E.

B. Polymerization

The catalyst was employed to polymerize ethylene using the conditions for Examples 1-5. The result is also shown in Table III.

TABLE III

Polymerization Results

| Example & Comp. Exp. Number | Titanium Species | Catalyst Efficiency Million # PE/# Ti | Exotherm[1] °C |
|---|---|---|---|
| 1[2] | DEZ-Ti(OEt)4 | 2.76 | 23° |
| 2[2] | DEZ-Ti(OnPr)$_4$ | 2.80 | 25° |
| 3[2] | DEZ-Ti(OiPr)$_4$ | 2.85 | 22° |
| 4[2] | DEZ-Ti(OnBu)$_4$ | 2.83 | 25° |
| 5[2] | DEZ-Ti(OEH)$_4$ | 2.89 | 22° |
| A | Ti(OEt)$_4$ | 2.35 | 18° |
| B | Ti(OnPr)$_4$ | 2.64 | 21° |
| C | Ti(OiPr)$_4$ | 2.30 | 13° |
| D | Ti(OnBu)$_4$ | 2.73 | 20° |
| E | Ti(OEH)$_4$ | 2.64 | 20° |
| F[3] | DEZ-Ti(OiPr)$_4$ | 2.57 | 13° |

[1] Exotherm is the initial rise in reactor temperature from 150°C when the catalyst is added to the reactor.

[2] DEZ and titanium compound premixed to form a complex or reactive product.

[3] DEZ and titanium compound added separately.

EXAMPLES 6-11

  A.  Preparation of Diethyl Zinc-Ti(OiPr)$_4$
      Complexes

      To 1.0 ml of neat Ti(OiPr)$_4$ was added varying amounts of 0.88 M diethyl zinc as indicated in Table IV.  These mixtures were then diluted to 100.0 ml with Isopar$^{®}$ E, giving a titanium concentration of 0.0336 M.  Again, these solutions are stored in amber bottles to prevent photodecomposition.

  B.  Preparation of the Catalyst Compositions

      Using the diethyl zinc-titanium solutions prepared above, the catalyst composition was prepared by adding, with stirring under a nitrogen atmosphere the following components added in the following order:

      97.95 ml of Isopar$^{®}$ E
       0.80 ml of 0.745 M di-n-hexyl magnesium
       0.80 ml of 0.94 M ethyl aluminum dichloride
       0.45 ml of 0.0336 M diethyl zinc-titanium mixture
      100.0 ml

## TABLE IV

### Ratios for DEZ-Ti(OiPr)$_4$ Complex Solutions

| Example & Comp. Exp. Number | ml DEZ | ml Ti(OiPr)$_4$ | Ratio Zn:Ti | Color Initially | Color After 1 Day |
|---|---|---|---|---|---|
| 6 | 3.82 | 1.00 | 1:1 | Dark Green | Dark Green |
| 7 | 1.91 | 1.00 | 1/2:1 | Dark Purple | Dark Purple |
| 8 | 0.96 | 1.00 | 1/4:1 | Light Purple | Purple |
| 9 | 0.48 | 1.00 | 1/8:1 | Light Yellow | Light Purple |
| 10 | 0.24 | 1.00 | 1/16:1 | Clear | Very Light Purple |
| 11 | 0.12 | 1.00 | 1/32:1 | Clear | Clear |
| G | 0 | 1.00 | 0:1 | Clear | Clear |

0057739

C.  Polymerizations

Each of the catalysts were employed to polymerize ethylene using the conditions for Examples 1-5.  The results are shown in Table V.

COMPARATIVE EXPERIMENT G

A.  Preparation of the Catalyst Composition

A catalyst was prepared following the procedure given in Examples 6-11 above except that $Ti(OiPr)_4$ alone was used in place of the diethyl zinc-$Ti(OiPr)_4$ complex.  The catalyst color was similar to that of other catalysts--a straw brown in color.

B.  Polymerization

The comparative catalyst was employed to polymerize ethylene using the conditions for Examples 1-5.  The result is shown in Table V.

TABLE V

Polymerization Results

| Example & Comp. Exp. Number | Ratio Zn:Ti | Catalyst Efficiency Million # PE/# Ti | Exotherm[1] °C |
|---|---|---|---|
| 6 | 1:1 | 3.28 | 14 |
| 7 | 1/2:1 | 3.34 | 16 |
| 8 | 1/4:1 | 3.32 | 13 |
| 9 | 1/8:1 | 2.93 | 12 |
| 10 | 1/16:1 | 3.02 | 13 |
| 11 | 1/32:1 | 2.62 | 10 |
| G | 0:1 | 2.71 | 9 |

[1] Exotherm is the initial rise in reactor temperature from 150°C when the catalyst is added to the reactor.

## CLAIMS

1. In a catalyst composition comprising (A) a transition metal (Tm) compound and a zinc compound, (B) a magnesium halide, and (C) an aluminum compound, if required to provide sufficient quantities of aluminum, said composition having an atomic ratio of the elements Mg:Tm of 1:1 to 2000:1; Zn:Tm at least 0.03:1; Al:Tm of 0.1:1 to 2000:1 and an excess X:Al of 0.0005:1 to 10:1; the improvement which comprises forming a reaction product or complex of the transition metal compound and the zinc compound prior to preparation of the catalyst therefrom by admixture of:

(a) at least one transition metal compound represented by the formulae $Tm(OR)_y X_{x-y}$ or $Tm(OR)_{x-2}O$ wherein Tm is a transition metal selected from groups IVB, VB or VIB; each R is independently a hydrocarbyl group, having from 1 to about 20 carbon atoms; each X is independently a halogen; x has a value equal to the valence of Tm and y has a value from 1 to the valence of Tm; and

(b) at least one zinc compound represented by the formulae $R_2Zn$ and RZnX wherein each R is independently a hydrocarbyl group having from 1 to 20 carbon atoms and X is a halogen; and wherein these components are mixed in proportions such that the atomic ratio of Zn:Tm is at least about 0.03:1.

2. The catalyst composition of of Claim 1 wherein in component (a) Tm is titanium, each R is independently a hydrocarbyl group having from 1 to 10 carbon atoms and X is chlorine or bromine; component (b) has the formula $ZnR_2$ wherein R is a hydrocarbyl group having from 1 to 10 carbon atoms; and the Zn:Ti atomic ratio is from 0.12:1 to 5:1.

3. The catalyst composition of Claims 1 or 2 wherein component (a) is titanium tetraethoxide, titanium tetra-n-propoxide, titanium tetra-isopropoxide, titanium tetra-n-butoxide or titanium tetra--(2-ethylhexoxide), component (b) is dimethyl zinc, diethyl zinc, or diphenyl zinc, and the Zn:Ti ratio is 0.25:1 to 2:1.

4. The catalytic reaction product of (A) the reaction product or complex formed from the admixture of

(1)  at least one transition metal compound represented by the formulae $Tm(OR)_y X_{x-y}$ or $Tm(OR)_{x-2}O$ wherein Tm is a transition metal selected from groups IVB, VB or VIB; each R is independently a hydrocarbyl group, having from 1 to about 20 carbon atoms; each X is independently a halogen; x has a value equal to the valence of Tm and y has a value from 1 to the valence of Tm; and

(2)  at least one zinc compound represented by the formulae $R_2Zn$ and RZnX wherein each R is independently a hydrocarbyl group having from 1 to 20 carbon atoms and X is a halogen; and

(B) a magnesium halide resulting from the reaction of

    (1) an organomagnesium compound represented by the formula $MgR''_2 \cdot xMR''_y$ wherein M is aluminum or zinc, each R'' is independently a hydrocarbyl or hydrocarbyloxy group having from 1 to 20 carbon atoms, x has a value from zero to 10 and y has a value corresponding to the valence of M; with

    (2) a halide source selected from

        (a) an active non-metallic halide, said non-metallic halide corresponding to the formula R'X wherein R' is hydrogen or a hydrocarbyl group such that the hydrocarbyl halide is at least as active as sec-butyl chloride and does not poison the catalyst, and X is halogen or

        (b) a metallic halide corresponding to the formula $MR_{y-a}X_a$ wherein M is a metal of Group IIB, IIIA or IVA of Mendeleev's Periodic Table of Elements, R is a monovalent hydrocarbyl radical, X is halogen, y is a number corresponding to the valence of M and a is a number of 1 to y; and

(C) when the organomagnesium component and/or the halide source provides insufficient quantities of aluminum, an aluminum compound represented by the formula $AlR_{y'}X_{y''}$ wherein R and X are as defined above and y' and y'' each have a value of from 0 to 3 with the sum of y' and y'' being 3; and wherein the components are employed in quantities which provide an atomic ratio of the elements Mg:Tm of 1:1 to 2000:1;

Zn:Tm at least about 0.03:1; Al:Tm of 0.1:1 to 2000:1 and an excess X:Al of 0.0005:1 to 10:1.

5. The catalytic reaction product of Claim 4 wherein in Component A-1, R is a saturated aliphatic hydrocarbyl group having from 1 to 10 carbon atoms; in component B-1, x has a value of 0.15 to 2.5, and the components are employed in quantities which provide atomic ratios of Mg:Ti of 5:1 to 75:1, Zn:Ti of 1:1 to 75:1, and excess X:Al of 0.01:1 to 1.4:1.

6. The catalytic reaction product of Claim 4 wherein component A-1 is titanium tetraethoxide, titanium tetra-n-propoxide, titanium tetra-isopropoxide, titanium tetra-n-butoxide, or titanium tetra-(2-ethylhexoxide); component A-2 is dimethyl zinc, diethyl zinc or diphenyl zinc; component B-1 is a dialkyl magnesium compound wherein the alkyl groups independently have from 1 to 10 carbon atoms; and component B-2 is anhydrous hydrogen chloride, ethyl aluminum dichloride, or tin tetrachloride.

7. The catalytic reaction product of Claims 4 to 6 wherein the components are added in the order B-1, B-2, C, if employed, and A.

8. The catalytic reaction product of Claims 4 to 6 wherein the components are added in the order B-1, B-2, A and C, if employed, and provided that the halide source, B-2, is not a tin compound.

9.  A process for polymerizing one or more α-olefins which comprises conducting the polymerization under Ziegler polymerization conditions in the presence of a catalyst of Claims 1 to 8.

10.  The process of Claim 9 wherein ethylene or a mixture of ethylene with from 0.1 to 40 weight percent of a $C_3$-$C_{18}$ α-olefin is polymerized.

**0057739**

European Patent Office

**EUROPEAN SEARCH REPORT**

| Category | DOCUMENTS CONSIDERED TO BE RELEVANT | | Relevant to claim | CLASSIFICATION OF THE APPLICATION (Int Cl ³) |
|---|---|---|---|---|
| | Citation of document with indication, where appropriate, of relevant passages | | | |
| X | US - A - 4 238 355 (RANDALLS SHIP- LEY et al.) | | 1-10 | C 08 F 10/00<br>C 08 F 4/64<br>C 08 F 4/02<br>C 08 F 4/62 |
| | * Claims 1-13; column 3, line 42 to column 4, line 17; column 5, line 53 to column 6, line 58; examples 32-42 * | | | |
| | --- | | | |
| | US - A - 4 224 186 (KIRBY LOWERY Jr. et al.) | | 1-7,9, 10 | |
| | * Claims 1-9; column 3, lines 22- 61; column 5, lines 29-51; column 6, lines 34-40 * | | | TECHNICAL FIELDS SEARCHED (Int. Cl.³) |
| | --------- | | | C 08 F 10/00- 10/14<br>C 08 F 110/10- 110/14<br>C 08 F 210/00- 210/18<br>C 08 F 4/64<br>C 08 F 4/62<br>C 08 F 4/02 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family corresponding document

The present search report has been drawn up for all claims

| Place of search | Date of completion of the search | Examiner |
|---|---|---|
| The Hague | 13.10.1981 | WEBER |

EPO Form 1503 1 06.78